(19) Europäisches Patentamt
European Patent Office
Office européen des brevets

(11) **EP 4 224 209 A1**

(12) **EUROPEAN PATENT APPLICATION**
published in accordance with Art. 153(4) EPC

(43) Date of publication:
**09.08.2023 Bulletin 2023/32**

(21) Application number: **22871078.6**

(22) Date of filing: **14.10.2022**

(51) International Patent Classification (IPC):
***G01S 13/86*** (2006.01)

(52) Cooperative Patent Classification (CPC):
**G01S 7/41; G01S 13/86; G01S 13/931**

(86) International application number:
**PCT/CN2022/125380**

(87) International publication number:
**WO 2023/066156 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2021 CN 202111211441**

(71) Applicant: **Changsha CRRC Intelligent Control and
New Energy
Technology Co., Ltd.
Changsha, Hunan 410036 (CN)**

(72) Inventors:
• **ZHOU, Yanhui
Changsha, Hunan 410036 (CN)**

• **PENG, Zhichuan
Changsha, Hunan 410036 (CN)**
• **YANG, Jiejun
Changsha, Hunan 410036 (CN)**
• **WANG, Quan
Changsha, Hunan 410036 (CN)**
• **ZHU, ZeMin
Changsha, Hunan 410036 (CN)**
• **ZHANG, Zhiteng
Changsha, Hunan 410036 (CN)**
• **WANG, Wenming
Changsha, Hunan 410036 (CN)**

(74) Representative: **Patentanwälte Gierlich &
Pischitzis
Partnerschaft mbB
Gerbermühlstraße 11
60594 Frankfurt am Main (DE)**

(54) **VISUAL AND RADAR PERCEPTION FUSION METHOD AND TERMINAL DEVICE**

(57)    A vision-radar perception fusion method and a terminal device are provided in the disclosure. The method includes: acquiring a vision target and a radar target in front of a vehicle at a current moment and a tracked target at a previous moment; matching the vision target, the radar target and the tracked target and determining a matching state of each target; determining a type of the each target according to the matching state, the type being a fusion target and a single radar target; and determining a score of each target by combining the matching state and the type of the target, and if the score is greater than or equal to a preset score threshold, a target corresponding to the score being a fusion target. In the method of this disclosure, in the vision-radar perception fusion, a stable and reliable single radar target is output as the fusion target according to information such as an operating state of the vehicle and the dangerous area, which solves problems of flash alarm and false alarm for a single radar, greatly reduces a false detection rate and missing detection rate of the fusion target, and improves precision and stability of target perception; and the method has expansibility.

FIG. 1

**Description**

**TECHNICAL FIELD**

The disclosure belongs to the technical field of automatic driving, and particularly relates to a vision-radar perception fusion method and a terminal device.

**BACKGROUND**

At present, by virtue of automatic driving and assisted driving technology, it has reached broad consensus in the field of transportation to improve vehicle safety, prevent collision danger and reduce incidence of traffic accidents. Adopting advanced sensing technology to cause vehicles to have an active safety function has become a mandatory requirement of relevant traffic regulations.

In intelligent driving, it is key to accurately perceive moving states of front vehicles. A perceptual sensors includes a camera, a millimeter-wave radar, and a LiDAR. The LiDAR is expensive, and at present, a mainstream perceptual configuration reaching the market is the camera and the millimeter-wave radar. The camera can accurately detect a lane line and a type, size and color of a target, but with less high perception accuracy for a target position and speed. On the contrary, the millimeter-wave radar can accurately detect position and speed information of the target, but can't determine the type of the target. Therefore, by combining advantages of the both and with effective perception fusion, accuracy and precision of detection can be greatly improved.

It is required for perception fusion of the camera and the millimeter-wave radar on the one hand to obtain accurate information such as the position, speed, type, size and color of the target, and on the other hand to solve following problems.

1. In vision perception, deep learning is adopted to monitor the target, but untrained obstacle target cannot be detected.

2. A blind area of a forward-looking camera reaches a longitudinal distance of 2 to 3 meters, and there is missing detection.

3. The millimeter-wave radar detects many target points, and it is easy to take protruding objects (such as manhole covers and fences) as targets, which results in false detection.

It can be seen that a problem of missing detection exists for the camera, while a problem of false detection exists for the millimeter-wave radar. In order to reduce a missing detection rate, it is necessary to supplement millimeter wave radar points as effective targets, but the radar targets themselves may be wrongly detected. Therefore, the false detection rate and the missing detection rate are a pair of contradictions in perception fusion. Meanwhile, it is a challenge and also a key of fusion algorithm to achieve a goal of extremely low false detection rate and missing detection rate in the perception fusion.

At present, there are two types of methods for vision and millimeter-wave radar perception fusion. One type is to fuse from original data, that is, from levels of image pixels and radar point clouds. This method is complex and involves huge amount of calculation, and it is difficult to run on embedded equipment on board vehicles. The other type is target-level fusion, that is, the camera outputs target-level data through deep learning algorithm and the millimeter-wave radar outputs target-level data through clustering algorithm, which is then fused by clustering or matching or other methods. This method decomposes difficulty of perception problems, reduces complexity and is most widely used. However, due to deficiency of the vision and the radar itself in detecting targets, it is still difficult to achieve extremely low false detection rate and missing detection rate at the same time.

**SUMMARY**

A vision-radar perception fusion method and a terminal device are provided in this disclosure, which solve technical problems of high false detection rate and missing detection rate in perceiving front vehicles in existing intelligent driving.

In a first aspect of the disclosure, a vision-radar perception fusion method is disclosed, which includes:

acquiring a vision target and a radar target in front of a vehicle at a current moment and a tracked target at a previous moment;

matching the vision target, the radar target and the tracked target and determining a matching state of each target;

determining a type of the each target according to the matching state, the type being a fusion target and a single radar target; and

determining a score of each target by combining the matching state and the type of the target, and if the score is greater than or equal to a preset score threshold, a target corresponding to the score being a fusion target.

Preferably, the matching the vision target, the radar target and the tracked target and determining the matching state of each target specifically includes:

matching the vision target, the radar target and the tracked target in a pairwise manner and determining the matching state of each target, which includes:
matching the vision target with the radar target and the tracked target respectively;
matching remaining tracked targets with the radar target after matching of the vision target is completed;
screening out a single radar target satisfying a preset condition from remaining radar targets after matching of the tracked target is completed; and
determining the matching state of each target.

Preferably, the matching in the pairwise manner specifically includes:

determining whether a transverse distance deviation, a longitudinal distance deviation and a speed deviation between two targets to be matched are all less than respective preset deviation thresholds; and
determining two most matched targets using a first formula to match if the transverse distance deviation, the longitudinal distance deviation and the speed deviation between two targets to be matched are all less than the respective preset deviation thresholds, the first formula being:

$$R = K_x \cdot \Delta X + K_y \cdot \Delta Y + (1 - K_x - K_y) \cdot \Delta V$$

in which $K_x \in [0,1]$ is a weight of a longitudinal distance, $K_y \in [0,1]$ is a weight of a transverse distance, $\Delta X$ is the longitudinal distance deviation and $\Delta X = |X_1 - X_2|$, $\Delta Y$ is the transverse distance deviation and $\Delta Y = |Y_1 - Y_2|$, $\Delta V$ is the speed deviation and $\Delta V = |V_1 - V_2|$, $X_1$, $Y_1$ and $V_1$ are a longitudinal distance, a transverse distance and a speed of a first target to be matched respectively, $X_2$, $Y_2$ and $V_2$ are a longitudinal distance, a transverse distance and a speed of a second target to be matched respectively.

Preferably, the determining the score of each target by combining the matching state and the type of the target specifically includes:
acquiring the matching state of each target and determining whether the matching state is a matching state in matching of the tracked target with the radar target; determining a score corresponding to the matching state by combining a preset mapping relationship between the matching state and the score if the matching state is not the matching state in matching of the tracked target with the radar target; and determining whether the vehicle is stationary and the type of the target successively and determining the score of the target according to a determination result if the matching state is the matching state in matching of the tracked target with the radar target.
Preferably, the determining whether the vehicle is stationary and the type of the target successively and determining the score of the target according to the determination result specifically includes:

determining whether the vehicle is stationary, acquiring a dangerous area in front of the vehicle if the vehicle is stationary, and determining whether the radar target is in the dangerous area, and determining a score of the radar target according to a determination result; and
determining whether the type of the target is a single radar target if the target is not stationary, determining a score of the single radar target by combining speed information and position information of the single radar target if the type of the target is the single radar target; further determining whether the type of the target is a fusion target if the type of the target is not the single radar target, and determining whether the radar target is in the dangerous area and determining the score of the radar target according to a determination result if the type of the target the is the fusion target; and determining a score of the fusion target by combining a preset mapping relationship between the type and the score of the target if the type of the target is not the fusion target.

Preferably, the determining the score of the fusion target by combining the preset mapping relationship between the type and the score of the target specifically includes:

determining whether a tracked target collected at the same time as the single radar target is a first target in an adjacent lane of the vehicle, determining whether a speed of the single radar target is less than a preset speed threshold and determining the score of the single radar target according to a determination result if the tracked target collected at the same time as the single radar target is the first target in the adjacent lane of the vehicle; and determining whether the tracked target collected at the same time as the single radar target is a first target in a lane where the vehicle is located if the tracked target collected at the same time as the single radar target is not the first target in the adjacent lane of the vehicle; determining whether position information of the single radar target is less than a preset position threshold and determining the score of the single radar target according to a determination result if the tracked target collected at the same time as the single radar target is the first target in the lane where the vehicle is located; directly determining the score of the single radar target according to the preset mapping relationship between the type and the score of the target if the tracked target collected at the same time as the single radar target is not the first target in the lane where the vehicle is located.

Preferably, the determining whether position information of the single radar target is less than a preset position threshold and determining the score of the single radar target according to the determination result specifically includes: determining whether a longitudinal position of the single radar target is less than a first preset position threshold, and further determining whether a transverse position of the single radar target is less than a second preset position threshold and determining the score of the single radar target according to a determination result if the longitudinal position of the single radar target is less than the first preset position threshold.

Preferably, the acquiring the dangerous area in front of the vehicle specifically includes:

determining a future traveling path of the vehicle according to lane line information and vehicle information and recording the future traveling path as an estimated path;
determining a lane where the vehicle is located and its adjacent lanes according to the estimated path; and
determining the dangerous area in front of the vehicle according to the lane where the vehicle is located.

Preferably, the determining the future traveling path of the vehicle according to the lane line information and the vehicle information and recording the future traveling path as the estimated path specifically includes:

determining the estimated path according to a second formula. The second formula is:

$$ y = K_1 \frac{\dot{\psi}}{2V_x} x^2 + K_2 (\frac{c_2}{2} x^2 + c_1 x) $$

in which $x$ is a longitudinal position of the vehicle, $y$ is a transverse position of the vehicle; $K_1$ and $K_2$ is a weighting factor; $c_1$ and $c_2$ are a curvature and slope of a center lane line respectively; $\dot{\psi}$ is a yaw rate of the vehicle; and $V_x$ is a speed of the vehicle.

In a second aspect of the present disclosure, a terminal device is disclosed, which includes a memory, a processor and a computer program stored in the memory and executable on the processor, and the processor implements steps in above methods when executing the program.

Compared with related art, the disclosure has following beneficial effects.

In the vision-radar perception fusion, a stable and reliable single radar target is output as the fusion target according to information such as an operating state of the vehicle and the dangerous area, which solves problems of flash alarm and false alarm for a single radar, greatly reduces the false detection rate and missing detection rate of the fusion target, and improves precision and stability of target perception.

The method according to the disclosure has expansibility and can be extended to perception fusion of multi-sensors.

## BRIEF DESCRIPTION OF THE DRAWINGS

FIG. 1 is a flow chart of a vision-radar perception fusion method according to the present disclosure;
FIG. 2 is a schematic structural diagram of a vision-radar perception fusion method according to an embodiment of the present disclosure;

FIG. 3 is a flowchart of target matching according to an embodiment of the present disclosure;
FIG. 4 is a schematic diagram of a target matching state according to an embodiment of the present disclosure;
FIG. 5 is a schematic diagram of a driving lane line according to an embodiment of the present disclosure;
FIG. 6 is a schematic diagram of target tracking content according to an embodiment of the present disclosure;
FIG. 7 is a flowchart of scoring of a fusion target according to an embodiment of the present disclosure; and
FIG. 8 is a schematic diagram of a speed coordinate system and a position coordinate system according to an embodiment of the present disclosure.

**DETAILED DESCRIPTION**

In Technical schemes of the disclosure will be described in further detail in the following in combination with the attached drawings and specific embodiments. It should be understood that following embodiments only illustrate and explain the present disclosure, and should not be construed as limiting protection scope of the present disclosure. All technologies realized based on above contents of the present disclosure are covered by the scope that the present disclosure is intended to protect.

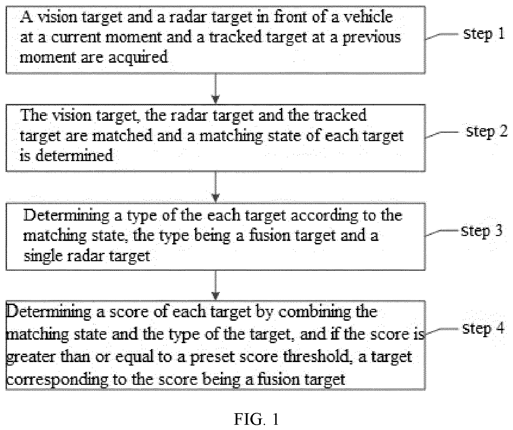

In a first aspect of the disclosure, a vision-radar perception fusion method is disclosed, as shown in FIG. 1, which includes following steps 1 to 4.

In step 1, a vision target and a radar target in front of a vehicle at a current moment and a tracked target at a previous moment are acquired.

In step 2, the vision target, the radar target and the tracked target are matched and a matching state of each target is determined, which specifically includes following content.

The vision target, the radar target and the tracked target are matched in a pairwise manner so as to determine the matching state of each target, which includes following steps 2.1 to 2.4.

In step 2.1, the vision target is matched with the radar target and the tracked target respectively.

In step 2.2, remaining tracked targets are matched with the radar target after matching of the vision target is completed.

In step 2.3, a single radar target satisfying a preset condition is screened out from remaining radar targets after matching of the tracked target is completed.

In step 2.4, the matching state of each target is determined.

The matching in the pairwise manner specifically includes following content.
determining whether a transverse distance deviation, a longitudinal distance deviation and a speed deviation between two targets to be matched are all less than respective preset deviation thresholds; and

Two most matched targets are determined using a first formula to match if the transverse distance deviation, the longitudinal distance deviation and the speed deviation between two targets to be matched are all less than the respective preset deviation thresholds. The first formula is:

$$R = K_x \cdot \Delta X + K_y \cdot \Delta Y + (1 - K_x - K_y) \cdot \Delta V$$

in which $K_x \in [0,1]$ is a weight of a longitudinal distance, $K_y \in [0,1]$ is a weight of a transverse distance, $\Delta X$ is the longitudinal distance deviation and $\Delta X = |X_1 - X_2|$, $\Delta Y$ is the transverse distance deviation and $\Delta Y = |Y_1 - Y_2|$, $\Delta V$ is the speed deviation and $\Delta V = |V_1 - V_2|$, $X_1$, $Y_1$ and $V_1$ are a longitudinal distance, a transverse distance and a speed of a first target to be matched respectively, $X_2$, $Y_2$ and $V_2$ are a longitudinal distance, a transverse distance and a speed of a second target to be matched respectively.

In step 3, a type of the each target is determined according to the matching state. The type can be a fusion target and a single radar target.

In step 4, a score of each target is determined by combining the matching state and the type of the target, and if the score is greater than or equal to a preset score threshold, a target corresponding to the score is a fusion target, which specifically includes following steps 4.1 and 4.2.

In step 4.1, the matching state of each target is acquired and it is determined whether the matching state is a matching state in matching of the tracked target with the radar target. A score corresponding to the matching state is determined by combining a preset mapping relationship between the matching state and the score if the matching state is not the matching state in matching of the tracked target with the radar target. Whether the vehicle is stationary and the type of the target are successively determined and the score of the target is determined according to a determination result if the matching state is the matching state in matching of the tracked target with the radar target.

A step in which whether the vehicle is stationary and the type of the target are successively determined and the score of the target is determined according to a determination result specifically includes following content.

It is determined whether the vehicle is stationary, a dangerous area in front of the vehicle is acquired if the vehicle is stationary, and it is determined whether the radar target is in the dangerous area, and a score of the radar target is determined according to a determination result.

It is determined whether the type of the target is a single radar target if the target is not stationary, a score of the single radar target is determined by combining speed information and position information of the single radar target if the type of the target is the single radar target. It is further determined whether the type of the target is a fusion target if the type of the target is not the single radar target, and it is determined whether the radar target is in the dangerous area and the score of the radar target is determined according to a determination result if the type of the target the is the fusion target. A score of the fusion target is determined by combining a preset mapping relationship between the type and the score of the target if the type of the target is not the fusion target.

Preferably, a step in which the score of the fusion target is determined by combining the preset mapping relationship between the type and the score of the target specifically includes following content.

It is determined whether a tracked target collected at the same time as the single radar target is a first target in an adjacent lane of the vehicle, and it is determined whether a speed of the single radar target is less than a preset speed threshold and the score of the single radar target is determined according to a determination result if the tracked target collected at the same time as the single radar target is the first target in the adjacent lane of the vehicle.

It is determined whether the tracked target collected at the same time as the single radar target is a first target in a lane where the vehicle is located if the tracked target collected at the same time as the single radar target is not the first target in the adjacent lane of the vehicle. It is determined whether position information of the single radar target is less than a preset position threshold and the score of the single radar target is determined according to a determination result if the tracked target collected at the same time as the single radar target is the first target in the lane where the vehicle is located; and the score of the single radar target is directly determined according to the preset mapping relationship between the type and the score of the target if the tracked target collected at the same time as the single radar target is not the first target in the lane where the vehicle is located.

A step in which it is determined whether position information of the single radar target is less than a preset position threshold and the score of the single radar target is determined according to the determination result specifically includes following content.

It is determined determining whether a longitudinal position of the single radar target is less than a first preset position threshold, and it is further determined whether a transverse position of the single radar target is less than a second preset position threshold and the score of the single radar target is determined according to a determination result if the longitudinal position of the single radar target is less than the first preset position threshold.

In step 4.2, if the score is greater than or equal to a preset score threshold, the target corresponding to the score is the fusion target.

A step in which the dangerous area in front of the vehicle is acquired in the step 4 specifically includes following content.

A future traveling path of the vehicle is determined according to the lane line information and the vehicle information and the future traveling path is recorded as an estimated path, which specifically includes following content.

The estimated path is determined according to a second formula. The second formula is:

$$y = K_1 \frac{\dot{\psi}}{2V_x} x^2 + K_2 (\frac{c_2}{2} x^2 + c_1 x)$$

in which $x$ is a longitudinal position of the vehicle, $y$ is a transverse position of the vehicle; $K_1$ and $K_2$ is a weighting factor; $c_1$ and $c_2$ are a curvature and slope of a center lane line respectively; $\dot{\psi}$ is a yaw rate of the vehicle; and $V_x$ is a speed of the vehicle.

A lane where the vehicle is located and its adjacent lanes are determined according to the estimated path.

The dangerous area in front of the vehicle is determined according to the lane where the vehicle is located.

In this disclosure, in the vision-radar perception fusion, a stable and reliable single radar target is output as the fusion target according to information such as an operating state of the vehicle and the dangerous area, which solves problems of flash alarm and false alarm for a single radar, greatly reduces the false detection rate and missing detection rate of the fusion target, and improves precision and stability of target perception. Meanwhile, the method according to the disclosure has expansibility and can be extended to perception fusion of multi-sensors.

In a second aspect of the present disclosure, a terminal device is disclosed, which includes a memory, a processor and a computer program stored in the memory and executable on the processor, and the processor implements steps in above methods when executing the program.

In the following, the method according to the present disclosure will be described in detail with more specific embodiments.

An object of the disclosure is to simultaneously reduce the false detection rate and the missing detection rate of perception fusion. This is mainly divided into two parts. In a first part: a problem of target precision and stability is solved through target matching and tracking; and in a second part: an effective single radar target is supplemented as the fusion target according to the operating state, operating area and dangerous state of an ego vehicle so as to reduce the false detection rate and missing detection rate of the fusion.

Firstly, the matching is performed according to the information such as the target position and speed output by vision and the radar. A matching index is determined by a three-dimensional matching box, and a size of the matching box is determined according to characteristics of different sensors. Matched targets are tracked, scored and weighted. Tracked targets whose scores reach a certain threshold can be output as fusion targets. In this way, problems of target precision and target flicker are solved.

Then, a danger level of the operating area is subdivided according to the estimated path, so as to divide the danger level of the target. Importance of the single radar target is determined so as to realize tracking of important single radar targets. By tracking, scoring and outputting the single radar target, perception coverage can be improved.

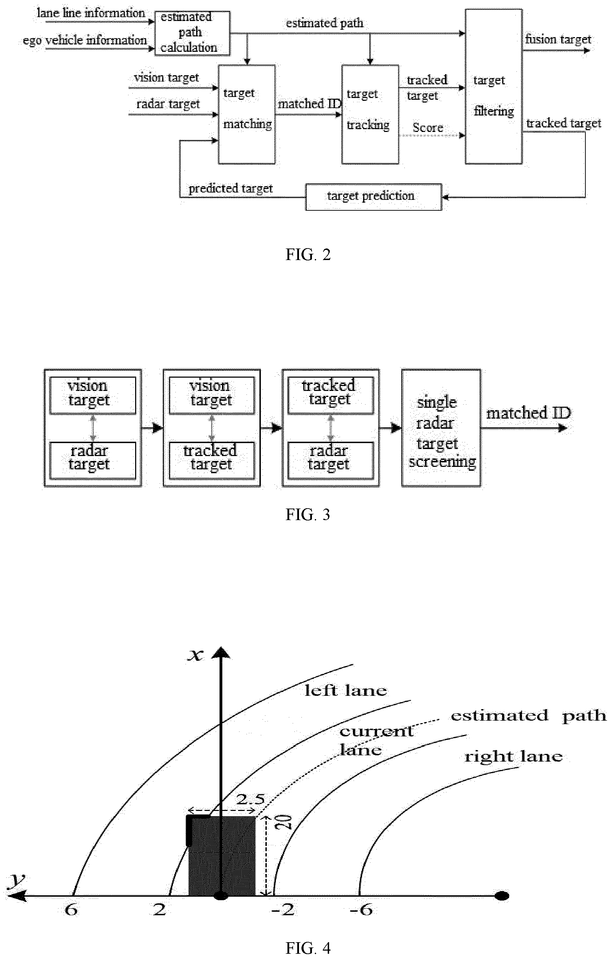

In this embodiment, a structural schematic diagram of the vision-radar perception fusion method is shown in FIG. 2. It includes five parts: estimated path calculation, target matching, target tracking, target filtering and target prediction.

In the estimated path calculation: a future traveling trajectory of the vehicle is calculated according to lane line information and ego vehicle information, so as to determine a boundary of target filtering. The lane line information is cubic polynomial coefficient; and the ego vehicle information (vehicle information) includes a vehicle speed and a yaw rate.

In the target matching: the vision target, the radar target and the tracked target (historical target) are matched. Matching parameters involve a position and a speed. The output is a matched ID.

In the target tracking: according to a state of the target matching, the target is weighted in position and speed and is scored, and the tracked target is output.

In filtering and fusion output: the target is filtered according to the score of the tracked target and a boundary for the transverse position. A stable tracked target is output, which is the fusion target.

In the target prediction: a position of the tracked target at a next moment is predicted according to a target speed and a current position.

I. Estimated path

The estimated path is calculated with a formula (1):

$$y = K_1 \frac{\dot{\psi}}{2V_x} x^2 + K_2 (\frac{c_2}{2} x^2 + c_1 x) \qquad (1)$$

in which $x$ is a longitudinal position of the vehicle, $y$ is a transverse position of the vehicle; $K_1$ and $K_2$ are weighting factors, and values of $K_1$ and $K_2$ in this embodiment are both 0.5, and can be other values as long as $K_1 + K_2 = 1$ can be satisfied; $c_1$ and $c_2$ are a curvature and slope of a center lane line respectively, and the lane center line is a center line of the lane where the vehicle is located, $\psi$ is a yaw angle of the ego vehicle in rad, and $\dot{\psi}$ is a yaw rate of the vehicle; and $V_x$ is a speed of the vehicle in m/s.

II. Target matching

In target matching, a priority of the vision target is higher than that of the radar target. A matching process is shown in FIG. 3.

Firstly, the vision target (vehicles and cyclists) is configured to be matched with the radar target and the tracked target.

Remaining tracked targets are matched with the radar target.

Finally, a specific single radar target is selected from remaining radar targets.

Whether two targets are matched with each other or not is determined by the matching box. There may be multiple different types of targets to be matched in one matching box. A target with a smallest weighted distance is selected as the most matching target according to weighted distances of the targets, and its ID is output.

(1) Setting of matching box

The matching box is configured to determine whether the vision target, the radar target and the tracked target belong to a same actual target. A matching box (MatchBox), expressed in Mb, is set according to three parameters of a longitudinal distance, a transverse distance and a speed. Three parameter components of the Mb are Mx, My and Mv, which are set according to a measurement error range of a specific sensor. The longitudinal distance is a distance extending along a lane direction, and the transverse distance is a distance perpendicular to the lane extending direction.
If the longitudinal distance deviation between two targets is $\Delta X$, the transverse distance deviation is $\Delta Y$, and the speed deviation is $\Delta V$, then a matching condition described in a formula (2) can be satisfied, indicating that the two targets are matched.

$$\left(\left|\Delta X\right| < M_x\right) \& \& \left(\left|\Delta Y\right| < M_y\right) \& \& \left(\left|\Delta V\right| < M_v\right) \qquad (2)$$

(2) Weighted distance of targets

A weighted distance of targets is used to indicate difference between two targets, and a target with a smallest weighted distance in the matching box is a most matched target. The weighted distance of the targets is calculated according to a longitudinal distance deviation, a transverse distance deviation and a speed deviation between targets.
A longitudinal distance, a transverse distance and a speed of a target are expressed as (X,Y,V), then a weighted distance of two targets is

$$R = K_x \cdot \Delta X + K_y \cdot \Delta Y + (1 - K_x - K_y) \cdot \Delta V \qquad (3)$$

in which $K_x \in [0,1]$ is a weight of a longitudinal distance, $K_y \in [0,1]$ is a weight of a transverse distance, $\Delta X$ is the longitudinal distance deviation and $\Delta X = |X_1 - X_2|$, $\Delta Y$ is the transverse distance deviation and $\Delta Y = |Y_1 - Y_2|$, $\Delta V$ is the speed deviation and $\Delta V = |V_1 - V_2|$, $X_1$, $Y_1$ and $V_1$ are a longitudinal distance, a transverse distance and a speed of a first target to be matched respectively, $X_2$, $Y_2$ and $V_2$ are a longitudinal distance, a transverse distance and a speed of a second target to be matched respectively. Because a longitudinal coordinate range is greater than a transverse coordinate range, it is generally taken as $K_x > 2K_y$.

(3) Target matching rules

Targets in the matching box belong to a same physical target.
A target with a smallest weighted distance in the matching box is the most matched target.
Each vision target (vehicle, cyclist) must belong to a separate physical target.
Each vision target (vehicle, cyclist) may be matched with multiple radar targets, and a target with a smallest weighted distance is the most matched target.
Each vision target (vehicle, cyclist) may be matched with multiple tracked targets, and a target with a smallest weighted distance is the most matched target.
Each tracked target may be matched with multiple radar targets, and a target with a smallest weighted distance is the most matched target.
At most three single radar targets can be chosen, one in a current lane and one in an adjacent lane. The single radar target must be a first target in the lane. The single radar target in the adjacent lane must be a moving target.

(4) Matching state and confidence

According to above rules, there are 8 matching states, including 7 valid states, as shown in FIG. 4. One vision target may be matched with one or more radar targets and tracked targets in the matching box, and a target with a smallest target is selected as the best matched target.
Evaluation criteria of target confidence are obtained according to the matching state, as shown in Table 1, where a symbol √ indicates that there are such targets in the matching state. Matching state 0 is an invalid state.

Table 1 Relationship between Matching State and Confidence

| Matching state | Tracked target | Vision target | Radar target | Confidence |
|---|---|---|---|---|
| 7 | √ | √ | √ | Highest target confidence |
| 6 | √ | √ | | High target confidence |
| 5 | √ | | √ | General target confidence |
| 4 | √ | | | Target lost |
| 3 | | √ | √ | New target -high confidence |
| 2 | | √ | | New target- single vision target |
| 1 | | | √ | New target- single radar target |

(5) Driving lane

In the matching rules, the current lane and the adjacent lane are distinguished by the estimated path, that is, the estimated path is offset by 6 m, 2 m, -2 m and -6 m respectively. It is noted that the driving lane is not a lane determined by the actual lane line, but a lane where the vehicle is about to drive.

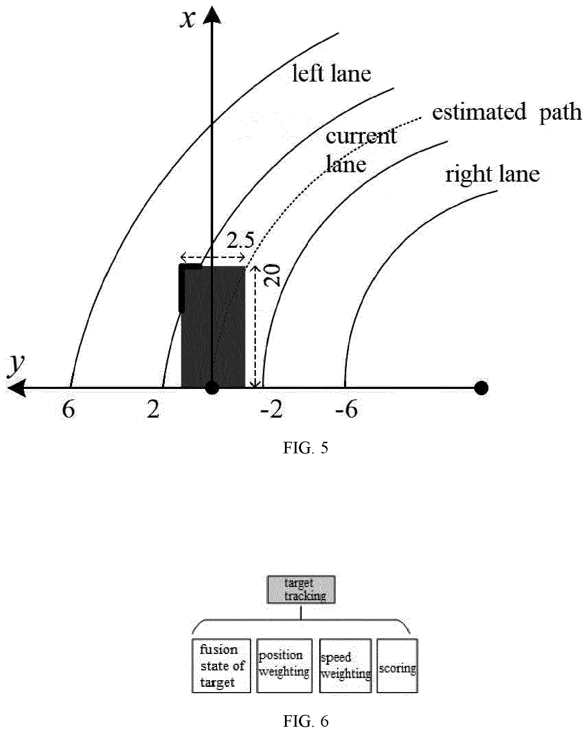

A schematic diagram of the driving lane line is shown in FIG. 5. Under any condition, the current lane must contain the dangerous area, that is, the rectangular area in the figure. In a specific embodiment, a longitudinal length of the rectangular area is 20 m and the transverse length thereof is 2.5 m.

III. Target tracking

The target tracking involves position weighting, speed weighting, scoring of the tracked target, and determining of a fusion state. As shown in FIG. 6,

(1) Fusion state of target

The fusion state of the target is determined according to the matching state, as shown in Table 2. Rules for determining the fusion state of the target are as follows.

In determining of the fusion state of the target, a priority of the vision target is higher than that of the radar target.

The vision target, the single radar target and the fusion target have fusion states 1, 2 and 3 respectively.

Targets with matching states 1, 2 and 3 are new targets.

There is no vision target in targets with matching states 4 and 5, so it is impossible to determine whether the vision target is involved at the last time, so a type of a fusion target at the last time is used.

Table 2 Fusion state of target

| Matching state | Tracked target | Radar target | Type of fusion target | Fusion state |
|---|---|---|---|---|
| 7 | √ | √ | Tracked target- fusion target | 3 |
| 6 | √ | | Tracked target- vision target | 1 |
| 5 | √ | √ | Tracked target- radar target | Value at last time |
| 4 | √ | | Tracked target- target lost | Value at last time |
| 3 | | √ | New target- fusion target | 3 |
| 2 | | | New target- single vision target | 1 |
| 1 | | √ | New target- single radar target | 2 |

(2) Position and speed weighting

The position includes a longitudinal position and a transverse position, and a magnitude of the weighting factor is determined according to an error measured by a sensor. For example, compared with the radar and vision perception, the vision perception has a larger longitudinal distance error and a smaller transverse distance error. Then in weighting the longitudinal distance, the radar has a larger weight; and in weighting the transverse distance, the vision has a larger weight.

In speed weighting, the radar has a larger weight and the vision has a smaller weight.

(3) Scoring of tracked target

For tracked targets that are continuously detected, scores may increase continuously, with a highest score of 200. For detected lost targets, scores decrease, with a minimum score of 0. A target with a score greater than 100 is a stable target and is output as a fusion target.

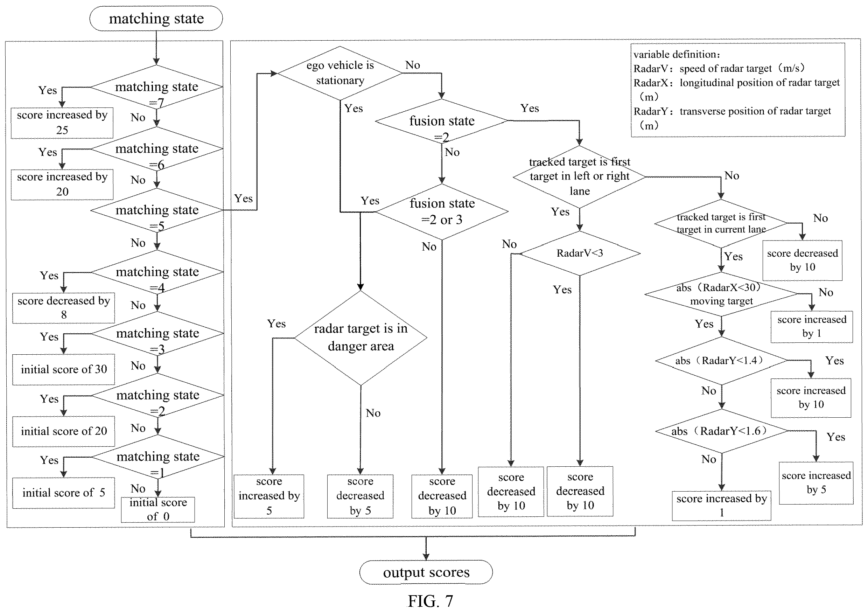

A scoring process is shown in FIG. 7. A process for the matching state 5 is most critical. Considering a state of the ego vehicle, problems of false alarm and flash alarm of the single radar target are solved by scoring, so that a stable and reliable single radar target can be output.

IV. Target filtering and fusion outputting

(1) Target filtering

Among the tracked targets, a target with a score of 0 is an invalid target and needs to be filtered out, that is, all attribute values are set to 0.

(2) Fusion outputting

According to the driving lane shown in FIG. 5, a transverse boundary of target filtering is determined. Tracked targets within the boundary with a score greater than 100 are output as fusion targets.

V. Target prediction

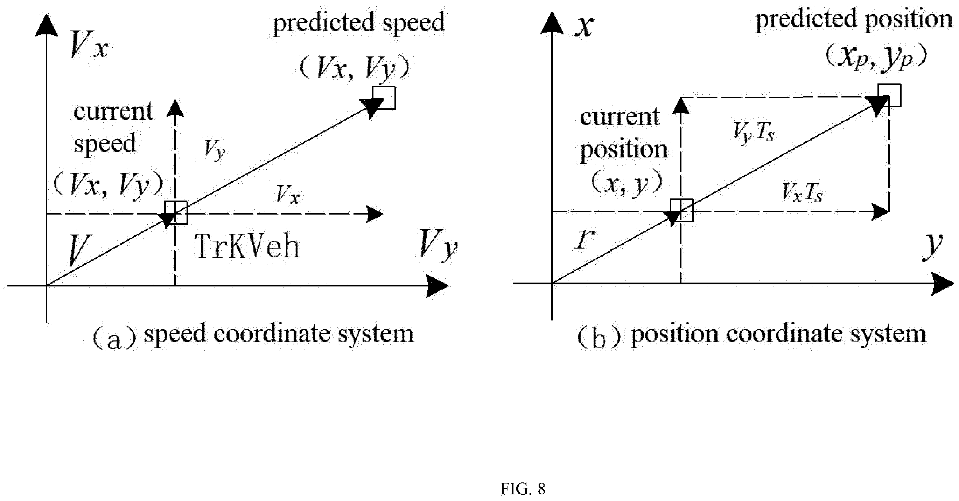

For a target whose speed is more than 3 m/s (10.8 Km/h), a position is predicted so that it can be matched accurately at a next moment. With a speed coordinate system and a position coordinate system shown in FIG. 8, a predicted speed is shown in a formula (4) after a time period $T_s$ has elapsed.

$$\begin{cases} r = \sqrt{x^2 + y^2} \\ V_x = \dfrac{V}{r}x, \ V_y = \dfrac{V}{r}y \\ x_p = x + V_x \cdot T_s \\ y_p = y + V_y \cdot T_s \end{cases} \quad (4)$$

In the method of this disclosure, in the vision-radar perception fusion, a stable and reliable single radar target is output as the fusion target according to information such as an operating state of the vehicle and the dangerous area, which solves problems of flash alarm and false alarm for a single radar, greatly reduces the false detection rate and missing detection rate of the fusion target, and improves precision and stability of target perception; and the method has expansibility and can be extended to perception fusion of multi-sensors.

**Claims**

1. A vision-radar perception fusion method, being **characterized by** comprising:

acquiring a vision target and a radar target in front of a vehicle at a current moment and a tracked target at a previous moment;
matching the vision target, the radar target and the tracked target and determining a matching state of each target;

determining a type of the each target according to the matching state, the type being a fusion target and a single radar target; and

determining a score of each target by combining the matching state and the type of the target, and if the score is greater than or equal to a preset score threshold, a target corresponding to the score being a fusion target.

2. The method according to claim 1, being **characterized in that** the matching the vision target, the radar target and the tracked target and determining the matching state of each target comprises:
matching the vision target, the radar target and the tracked target in a pairwise manner and determining the matching state of each target, which comprises:

matching the vision target with the radar target and the tracked target respectively;
matching remaining tracked targets with the radar target after matching of the vision target is completed;
screening out a single radar target satisfying a preset condition from remaining radar targets after matching of the tracked target is completed; and
determining the matching state of each target.

3. The method according to claim 2, being **characterized in that** the matching in the pairwise manner specifically comprises:

determining whether a transverse distance deviation, a longitudinal distance deviation and a speed deviation between two targets to be matched are all less than respective preset deviation thresholds; and
determining two most matched targets using a first formula to match if the transverse distance deviation, the longitudinal distance deviation and the speed deviation between two targets to be matched are all less than the respective preset deviation thresholds, the first formula being:

$$R = K_x \cdot \Delta X + K_y \cdot \Delta Y + (1 - K_x - K_y) \cdot \Delta V$$

in which $K_x \in [0,1]$ is a weight of a longitudinal distance, $K_y \in [0,1]$ is a weight of a transverse distance, $\Delta X$ is the longitudinal distance deviation and $\Delta X = |X_1 - X_2|$, $\Delta Y$ is the transverse distance deviation and $\Delta Y = |Y_1 - Y_2|$, $\Delta_V$ is the speed deviation and $\Delta V = |V_1 - V_2|$, $X_1,$ $Y_1$ and $V_1$ are a longitudinal distance, a transverse distance and a speed of a first target to be matched respectively, $X_2$, $Y_2$ and $V_2$ are a longitudinal distance, a transverse distance and a speed of a second target to be matched respectively.

4. The method according to claim 2 or 3, being **characterized in that** the determining the score of each target by combining the matching state and the type of the target specifically comprises:
acquiring the matching state of each target and determining whether the matching state is a matching state in matching of the tracked target with the radar target; determining a score corresponding to the matching state by combining a preset mapping relationship between the matching state and the score if the matching state is not the matching state in matching of the tracked target with the radar target; and determining whether the vehicle is stationary and the type of the target successively and determining the score of the target according to a determination result if the matching state is the matching state in matching of the tracked target with the radar target.

5. The method according to claim 4, being **characterized in that** the determining whether the vehicle is stationary and the type of the target successively and determining the score of the target according to the determination result specifically comprises:

determining whether the vehicle is stationary, acquiring a dangerous area in front of the vehicle if the vehicle is stationary, and determining whether the radar target is in the dangerous area, and determining a score of the radar target according to a determination result; and
determining whether the type of the target is a single radar target if the target is not stationary, determining a score of the single radar target by combining speed information and position information of the single radar target if the type of the target is the single radar target; further determining whether the type of the target is a fusion target if the type of the target is not the single radar target, and determining whether the radar target is in the dangerous area and determining the score of the radar target according to a determination result if the type of the target the is the fusion target; and determining a score of the fusion target by combining a preset mapping relationship between the type and the score of the target if the type of the target is not the fusion target.

6. The method according to claim 5, being **characterized in that** the determining the score of the fusion target by combining the preset mapping relationship between the type and the score of the target specifically comprises:

   determining whether a tracked target collected at the same time as the single radar target is a first target in an adjacent lane of the vehicle, determining whether a speed of the single radar target is less than a preset speed threshold and determining the score of the single radar target according to a determination result if the tracked target collected at the same time as the single radar target is the first target in the adjacent lane of the vehicle; and determining whether the tracked target collected at the same time as the single radar target is a first target in a lane where the vehicle is located if the tracked target collected at the same time as the single radar target is not the first target in the adjacent lane of the vehicle; determining whether position information of the single radar target is less than a preset position threshold and determining the score of the single radar target according to a determination result if the tracked target collected at the same time as the single radar target is the first target in the lane where the vehicle is located; directly determining the score of the single radar target according to the preset mapping relationship between the type and the score of the target if the tracked target collected at the same time as the single radar target is not the first target in the lane where the vehicle is located.

7. The method according to claim 6, being **characterized in that** the determining whether position information of the single radar target is less than a preset position threshold and determining the score of the single radar target according to the determination result specifically comprises:
   determining whether a longitudinal position of the single radar target is less than a first preset position threshold, and further determining whether a transverse position of the single radar target is less than a second preset position threshold and determining the score of the single radar target according to a determination result if the longitudinal position of the single radar target is less than the first preset position threshold.

8. The method according to any one of claims 5 to 7, being **characterized in that** the acquiring the dangerous area in front of the vehicle specifically comprises:

   determining a future traveling path of the vehicle according to lane line information and vehicle information and recording the future traveling path as an estimated path;
   determining a lane where the vehicle is located and its adjacent lanes according to the estimated path; and determining the dangerous area in front of the vehicle according to the lane where the vehicle is located.

9. The method according to claim 8, being **characterized in that** the determining the future traveling path of the vehicle according to the lane line information and the vehicle information and recording the future traveling path as the estimated path specifically comprises:

   determining the estimated path according to a second formula, the second formula being:

$$y = K_1 \frac{\dot{\psi}}{2V_x} x^2 + K_2 (\frac{c_2}{2} x^2 + c_1 x)$$

   in which $x$ is a longitudinal position of the vehicle, $y$ is a transverse position of the vehicle; $K_1$ and $K_2$ is a weighting factor; $c_1$ and $c_2$ are a curvature and slope of a center lane line respectively; $\dot{\psi}$ is a yaw rate of the vehicle; and $V_x$ is a speed of the vehicle.

10. A terminal device, being **characterized by** comprising a memory, a processor and a computer program stored in the memory and executable on the processor, wherein when the processor executes the computer program, steps of the method according to any one of claims 1 to 9 are realized.

A vision target and a radar target in front of a vehicle at a current moment and a tracked target at a previous moment are acquired — step 1

The vision target, the radar target and the tracked target are matched and a matching state of each target is determined — step 2

Determining a type of the each target according to the matching state, the type being a fusion target and a single radar target — step 3

Determining a score of each target by combining the matching state and the type of the target, and if the score is greater than or equal to a preset score threshold, a target corresponding to the score being a fusion target — step 4

FIG. 1

FIG. 2

FIG. 3

FIG. 4

FIG. 5

FIG. 6

FIG. 7

(a) speed coordinate system

(b) position coordinate system

FIG. 8

EP 4 224 209 A1

<div align="center">

**INTERNATIONAL SEARCH REPORT**

</div>

| | International application No. |
|---|---|
| | **PCT/CN2022/125380** |

| **A. CLASSIFICATION OF SUBJECT MATTER** |
|---|
| G01S 13/86(2006.01)i |
| According to International Patent Classification (IPC) or to both national classification and IPC |

| **B. FIELDS SEARCHED** |
|---|
| Minimum documentation searched (classification system followed by classification symbols) |
| G01S 13/- |
| Documentation searched other than minimum documentation to the extent that such documents are included in the fields searched |
| Electronic data base consulted during the international search (name of data base and, where practicable, search terms used) |
| CNKI, CNPAT, WPI, EPODOC: 车, 雷达, 视觉, 相机, 历史, 上一, 前一, 前面, 时刻, 帧, 目标, 物体, 障碍物, 对象, 匹配, vehicle, radar, lidar, camera, visual, sensor, target, object, obstacle, historical, last, time, frame, previous, match, correlation, relating |

| **C. DOCUMENTS CONSIDERED TO BE RELEVANT** | | |
|---|---|---|
| Category* | Citation of document, with indication, where appropriate, of the relevant passages | Relevant to claim No. |
| Y | CN 112033429 A (JILIN UNIVERSITY) 04 December 2020 (2020-12-04) description, paragraphs [0003], [0075], and [0090]-[0123] | 1-3, 10 |
| Y | CN 112731371 A (CHONGQING UNIVERSITY OF POSTS AND TELECOMMUNICATIONS) 30 April 2021 (2021-04-30) description, paragraphs [0094], [0103], and [0114]-[0119] | 1-3, 10 |
| A | CN 110422173 A (HUIZHOU DESAY SV INTELLIGENT TRANSP TECHNOLOGY RESEARCH INSTITUTE CO., LTD.) 08 November 2019 (2019-11-08) entire document | 1-10 |
| A | CN 111505624 A (CHINA AUTOMOTIVE ENGINEERING RESEARCH INSTITUTE CO., LTD. et al.) 07 August 2020 (2020-08-07) entire document | 1-10 |
| A | CN 112965083 A (INFINOVA (HANGZHOU) INFORMATION SYSTEM TECHNOLOGY CO., LTD.) 15 June 2021 (2021-06-15) entire document | 1-10 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 December 2022** | **27 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/125380** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2008300787 A1 (GM GLOBAL TECHNOLOGY OPERATIONS, INC.) 04 December 2008 (2008-12-04)<br>    entire document | 1-10 |

Form PCT/ISA/210 (second sheet) (January 2015)

INTERNATIONAL SEARCH REPORT
Information on patent family members

International application No.

**PCT/CN2022/125380**

| Patent document cited in search report | | | Publication date (day/month/year) | Patent family member(s) | | | Publication date (day/month/year) |
|---|---|---|---|---|---|---|---|
| CN | 112033429 | A | 04 December 2020 | None | | | |
| CN | 112731371 | A | 30 April 2021 | None | | | |
| CN | 110422173 | A | 08 November 2019 | None | | | |
| CN | 111505624 | A | 07 August 2020 | None | | | |
| CN | 112965083 | A | 15 June 2021 | None | | | |
| US | 2008300787 | A1 | 04 December 2008 | US | 7991550 | B2 | 02 August 2011 |

Form PCT/ISA/210 (patent family annex) (January 2015)